# EUROPEAN PATENT SPECIFICATION

(11) **EP 2 200 738 B1**
(45) Date of publication and mention of the grant of the patent: **08.05.2013**
(21) Application number: 08831249.1
(22) Date of filing: 11.09.2008
(51) Int. Cl.: B01J 8/18

(54) **FLUIDIZED BEDS AND METHODS OF FLUIDIZING**
WIRBELSCHICHTEN UND FLUIDISIERUNGSVERFAHREN
LITS FLUIDISÉS ET MÉTHODES DE FLUIDISATION

(30) Priority: 12.09.2007 US 853933
(43) Date of publication of application: 30.06.2010
(73) Proprietor: Synthesis Energy Systems Technologies, LLC, Houston TX 77056 (US)
(72) Inventor: NICOLL, David, H., Houston Texas 77056 (US); VAIL, Timothy, E., Houston Texas 77056 (US)
(74) Representative: Gregory, Robert John H.
(86) International application number: PCT/US2008/076089
(87) International publication number: WO 2009/036224

(56) References cited:
- EP-A2- 0 721 798
- JP-A- 61 133 132
- US-A- 3 370 361
- US-A- 3 733 056
- US-A- 3 982 900
- US-A- 4 359 326

## Description

### BACKGROUND OF THE INVENTION

**1. Field of the Invention**

The present invention relates to fluidized bed ports, fluidized beds, and methods of fluidizing. In another aspect, the present invention relates to fluidized bed reactors and to methods of gasification. In even another aspect, the present invention relates to fluidized bed coal gasification and to methods of coal gasification.

**2. Description of the Related Art**

Fluidization is commonly defined as an operation by which particulate fine solids are transformed into a fluid-like state through contact with a gas or liquid. Fluidized beds are known for their high heat and mass transfer coefficients, due to the high surface area-to-volume ratio of fine particles. Fluidized beds are used in a wide variety of industrial processes such reaction, drying, mixing, granulation, coating, heating and cooling.

In many industrial applications, a fluidized bed consists of a vertically-oriented column filled with granular material, and a fluid (gas or liquid) is pumped upward through a distributor at the bottom of the bed. When the drag force of flowing fluid exceeds gravity, particles are lifted and fluidization occurs.

In a reaction process, a fluidized bed suspends solid fuels on upward-blowing jets of air. The result is a turbulent mixing of gas and solids. The tumbling action, much like a bubbling fluid, provides more effective chemical reactions and heat transfer.

Fluidized bed technology is utilized in coal gasification. There are a number of patent applications that are directed toward fluidized beds and/or coal gasification.

A coal gasification reactor of the type wherein agglomerated coal ash is withdrawn from a fluid reaction bed of finely divided coal without the removal of the finely divided coal particles is disclosed in Jequier et al, U.S. Pat. No. 2,906,608 and Matthews et al, U.S. Pat. No. 3,935,825.

In a coal to gas conversion process of the type referenced, a vessel is provided for a fluidized bed. A gas distribution grid is usually positioned in the vessel and defines the bottom surface of the fluidized bed. The central portion of the grid may be conical or cylindrical in shape and comprises a passage. At the bottom of the passage, a constriction is provided having a fixed opening defining a venturi of fixed throat size to provide a uniform upward gas velocity into the vessel and thus into the fluidized bed. Directing a stream of high velocity gas through the venturi or passage into the reaction vessel causes ash particles in the vessel to agglomerate and eventually discharge through the passage and venturi throat.

U. S. Patent No. 4,023,280, issued May 17, 1977, to Schora et al., discloses a fluidized bed of material retained in a vessel receives a high velocity gas stream through a venturi orifice and passage to assist in the agglomeration of ash particles. The particles form a semi-fixed bed within the passage upstream from the venturi orifice. The particular dimensions of the semi-fixed bed are dependent, in part, upon the orifice size of the venturi. An iris valve defining the orifice permits adjustment of the cross-sectional area of the orifice thereby controls the velocity of the gas stream through the venturi.

U. S. Patent No. 4,435,364, issued March 6, 1984, to Vorres, discloses an apparatus for withdrawing agglomerated solids, e.g. ash, from a fluidized bed of finely divided solid hydrocarbonaceous material, e.g. coal, is described. Agglomeration is effected by a high temperature reaction between the inorganic constituents of the hydrocarbonaceous material in the fluidized bed environment. A venturi is utilized to serve as a passage for withdrawing the agglomerated solids from the fluidized bed. Spiral or other descending ridges are positioned on the interior surface of the constricted cylindrical opening of the venturi to permit variable and increased rates of agglomerate discharge with improved separation and classification of the solid materials.

U. S. Patent No. 4,453,495, issued, June 12, 1984, to Strohmeyer, Jr., discloses an integrated control for a steam generator circulating fluidized bed firing system. The system includes an integrated control means, and particularly at partial loads, for a steam generator having a circulating fluidized bed combustion system wherein gas recirculation means is used to supplement combustion air flow to maintain gas velocity in the circulation loop sufficient to entrain and sustain particle mass flow rate at a level required to limit furnace gas temperature to a predetermined value as 843.3 °C (1550 F). and wherein gas recirculation mass flow apportions heat transfer from the gas and recirculated particles among the respective portions of the steam generator fluid heat absorption circuits, gas and circulating particle mass flow rates being controlled selectively in a coordinated manner to complement each other in the apportionment of heat transfer optimally among the fluid heat absorption circuits while maintaining furnace gas temperature at a predetermined set point.

U. S. Patent No. 4,454,838, issued June 19, 1984, to Strohmeyer, Jr., discloses a dense pack heat exchanger for a steam generator having a circulating fluidized bed combustion system whereby a bed of solid particles comprising fuel and inert material is entrained in the furnace gas stream. Means are provided for collecting high temperature bed solid particles downstream of the furnace. The dense pack heat exchanger directs the hot collected particles down over heat transfer surface, such surface being a portion of the steam generator fluid circuits. Flow is induced by gravity means. The dense compaction of the solid particles around the fluid heat exchange circuits results in high heat transfer rates as the fluid cools the compacted solid material. The heat exchange surface is arranged to facilitate flow of the solid particles through the heat exchanger.

U. S. Patent No. 4,462,341, issued July 31, 1984, Strohmeyer, Jr. discloses a steam generator having a circulating fluidized bed combustion system whereby there is provision to admit air flow incrementally along the gas path to control combustion rate and firing temperature in a manner to maintain differential temperatures along the gas path. The initial portion of the gas path where combustion is initiated can be held in one temperature range as 843.3 °C (1550F) which is optimum for sulphur retention and the final portion of the combustion zone can be elevated in temperature as to 982.2 °C (1800F) to produce a greater degree of heat transfer through the gas to fluid heat exchange surface downstream of the combustion zone.

U. S. Patent No. 4,745,884, May 24, 1988, Coulthard, discloses a fluidized bed steam generating system includes an upstanding combustion vessel, a gas/solids separator, a convection pass boiler and a heat exchanger positioned directly below the boiler and all of the above elements except the gas/solids separator are enclosed within a waterwall structure having outside waterwalls and a central waterwall common to the reactor vessel on one hand and the convection pass boiler and heat exchanger on the other hand. The close proximity of the components of the system eliminate numerous problems present in conventional multi-solid fluidized bed steam generators.

In spite of all of the advancements in fluidized bed technology, one problem that may be encountered, is that of uneven flow of the inlet fluid through the inlet jets in the injection grid, especially if the injection grid is sloped and different fluid heads exist above the various inlet jets.

SUMMARY OF THE INVENTION

According to present invention, there is provided a fluidized bed apparatus. The apparatus includes a vessel having a top and bottom, and defining a fluidized bed region. The vessel further includes a sloping injection grid comprising fluid inlet ports positioned to provide a fluidizing medium to region, wherein at least two of the ports have different diameters.

According to another embodiment of the present invention, there is provided a method of fluidizing. The method includes introducing a fluid into a fluidized bed of particles, in a fluidized bed apparatus as claimed in say of claims 1 to 8 wherein the fluid is introduced into the bed through at least two ports having different diameters.

According to even another embodiment of the present invention, there is provided a method of coal gasification. The method includes introducing coal particles into a fluidizing bed region of a fluidized bed apparatus as claimed in say of claims 1 to 8. The method further includes introducing a fluidizing medium comprising oxygen and steam through an injection grid into the fluidized bed region, wherein the grid comprises at least two inlet ports having different cross sectional areas.

### BRIEF DESCRIPTION OF THE DRAWINGS

FIG. 1 is a schematic representation of one non-limiting example of a fluidized bed of the present invention.

FIG. 2 is a side view of a fluidized bed of the present invention showing the inlet fluid ports.

FIG. 3 is view of the inside bottom of the fluidized bed of the present invention, showing the inlet fluid ports.

FIG. 4 is a schematic representation of a portion of vessel 10, showing fluidized bed 12, distribution grid 18, ports 118, and selected inlet rows 1 and 11.

FIG. 5 is a partial view of another embodiment of vessel 10, showing an annular arrangement in the lower portion of vessel 10, specifically, Air/steam or oxygen/steam enter through pipe 28, and ash is removed through annular passage 22A.

### DETAILED DESCRIPTION OF THE INVENTION

The various embodiments of the port apparatus of the present invention comprise ports suitable for the inlet of fluidizing medium into a fluidized bed to fluidize solid particulate matter in the bed. In non-limiting embodiments, the port apparatus comprises at least two ports, preferably at least three ports, which comprise different cross sectional areas. The present invention contemplates that various apparatus may incorporate the various port apparatus, including, but not limited to reactors, mixers, sparging units, and fluidized beds.

The various embodiments of fluidized beds of the present invention include a number of ports for the inlet of the fluidizing medium, wherein at least two of the ports, preferably at least three ports, more preferable at least four ports, and even more preferably at least five ports, comprise different cross sectional areas.

In one non-limiting embodiment, the cross sectional area of the port increases as the port is positioned radially away from the center of the bed. Alternatively, in another non-limiting emodiment, the cross sectional area increases as the port is positioned radially closer to the center of the bed.

In even another non-limiting embodiment, the cross-sectional area is smaller for those ports having a smaller fluid head above the port, and larger for those ports having a larger fluid head above the port. In a non-limiting example of such an arrangement, for a conically shaped distribution scheme having a low portion in the center, fluid head above the ports decreases as the ports are positioned radially away from the center, and thus, cross sectional areas of the ports decreases as the port is positioned radially away from the center.

Certainly, as another non-limiting embodiment, the opposite arrangement may be utilized, that is, cross sectional areas of the ports may increase as the port is positioned radially away from the center.

In still even other embodiments, the cross sectional areas of various ports are selected so that the volumetric flow through the various ports is approximately equal within a selected design tolerance for the given head above the ports.

In still yet other non-limiting embodiments, the cross sectional areas of the various ports are selected so that the linear velocity of the fluid passing through the various ports may be controlled as desired for the application. This will allow for various flow patterns to be implemented within the fluidizer. For example, it may be desired to have a greater linear liquid velocity for those ports nearer the exterior wall of the fluidizer. Alternatively, it may be desired to have a greater linear liquid velocity for those ports at the center of the fluidizer. It may be desired to have turbulent flow through certain ports and laminar flow through other ports. It may also be desired to vary the Reynolds number of flow through the various ports. All of these may be accomplished by varying the cross sectional area of the inlet ports.

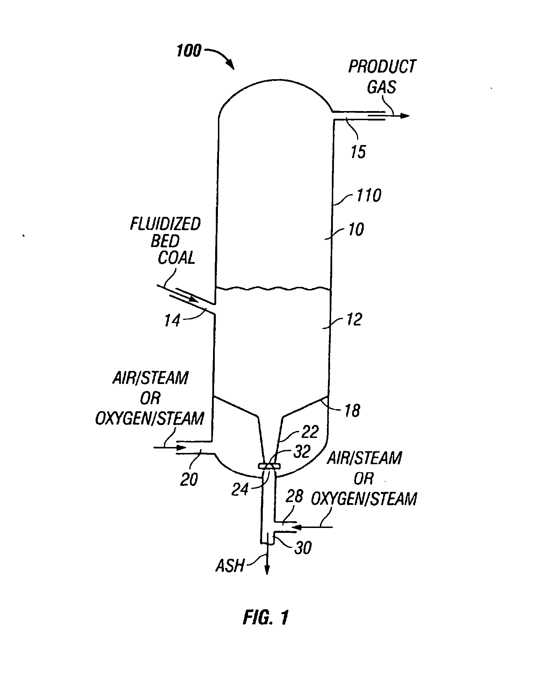

A non-limiting embodiment of a fluidized bed of the present invention is shown in FIG. 1, which shows a schematic drawing of a fluidized bed gasifying apparatus or device 100 that includes means for agglomerating ash or particulate in the fluidized bed. Such a device has been described in Jequier et al U.S. Pat. No. 2,906,608 and Matthews et al U.S. Pat. No. 3,935,825.

Briefly, device 100 includes a vessel 10 within which a fluidized bed 12 is retained. Vessel 100 further comprises outer wall 110. Pulverized fresh feed coal enters via line 14 and is contained within the bottom portion of the vessel or reactor 10 as a fluid bed 12 having a bed density of about 240 to 481 g/l (15 to 30 pounds per cubic foot). The coal within bed 10 is converted by reaction with steam and air to gaseous fuel components. These gaseous fuel components pass from the vessel 10 through a discharge line 15.

A shaped sloped grid 18 is provided within vessel 10 at the bottom of bed 12. Air and steam enter through a line 20 and pass through ports 118 in grid 18 to assist in maintenance of bed 12 in a fluidized state. The ash contained in the feed coal within bed 12 generally settles near the bottom of fluid bed 12 due to its greater density. Thus, the ash particles flow down the sides of the generally conical grid 18 and pass into or enter a withdrawal chamber or particle exit passage 22 that is formed as part of the grid 18.

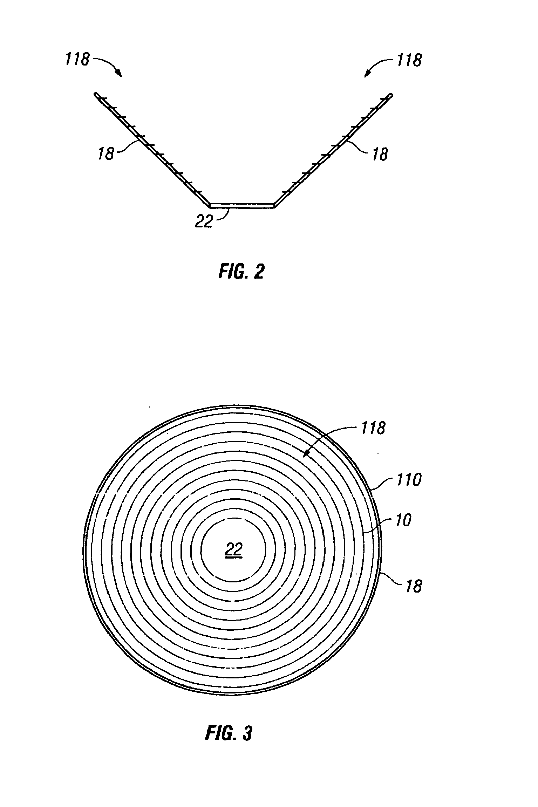

Referring additionally to FIG. 2 there is shown a cutaway side view of a portion of vessel 10 showing grid 18 and inlet fluid ports 118, comprising port rows 1-11. FIG. 3 shows a top view of the inside bottom of vessel 10, looking down upon grid 18 and inlet fluid ports 118.

According to the present invention, inlet fluid ports 118 may be of any suitable diameter that will allow passage of a fluidizing gas, and allow for the fluidizing of fluidized bed 12. More particularly, at least two inlet ports 118 will have different diameters. Even more particularly, moving radially away from passage 22 and toward wall 110 of vessel 10, the diameters of rows of inlet ports 118 will decrease. In other words, the ports of inlet port rows 8, 9, 10, and 11, closer to particle exit passage 22 will have larger diameters (and cross sectional areas) than the ports of inlets port rows 1,2, 3, and 4, closer to wall 110.

For the particular non-limiting design as shown in FIGs. 2-3, the particulars of grid 18 and inlet ports 118 are provided in the following Table 1.

| TABLE 1. GRID FLUIDIZING HOLE TABLE | | | | | | | |
|---|---|---|---|---|---|---|---|
| ROW | NO. OF HOLES | DIA m | SPACING m/HOLE | ID inch | ID m | AREA m²/HOLE | M²/LEVEL |
| 1 | 22 | 2.295 | 0.105 | 0.140 | 0.00359 | 0.000010 | 0.0002 |
| 2 | 20 | 2.140 | 0.105 | 0.150 | 0.00385 | 0.000012 | 0.0002 |
| 3 | 19 | 1.984 | 0.106 | 0.160 | 0.00410 | 0.000013 | 0.0002 |
| 4 | 18 | 1.828 | 0.104 | 0.170 | 0.00435 | 0.000015 | 0.0003 |
| 5 | 16 | 1.672 | 0.104 | 0.180 | 0.00462 | 0.000017 | 0.0003 |
| 6 | 15 | 1.516 | 0.104 | 0.190 | 0.00487 | 0.000019 | 0.0003 |
| 7 | 13 | 1.380 | 0.104 | 0.200 | 0.00513 | 0.000021 | 0.0003 |
| 8 | 12 | 1.204 | 0.105 | 0.220 | 0.00554 | 0.000025 | 0.0003 |
| 9 | 10 | 1.048 | 0.105 | 0.230 | 0.00590 | 0.000027 | 0.0003 |
| 10 | 8 | 0.992 | 0.105 | 0.240 | 0.00615 | 0.000030 | 0.0003 |
| 11 | 7 | 0.736 | 0.106 | 0.250 | 0.00841 | 0.000032 | 0.0002 |

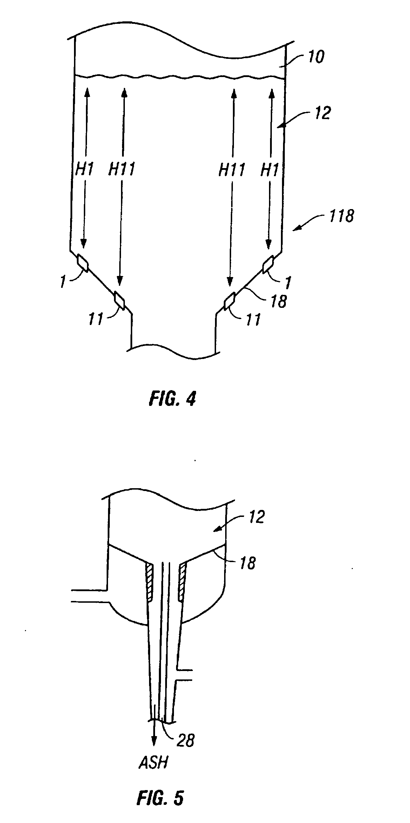

As explained earlier, in other embodiments, the cross-sectional area is smaller for those ports having greater fluid head above the port, and larger for those ports having lesser fluid head above the port. Referring now to FIG. 4, there is shown a schematic representation of a portion of vessel 10, showing fluidized bed 12, distribution grid 18, ports 118, and selected inlet rows 1 and 11. Notice, that fluid head H11 above ports 118 of inlet port row 11 is greater than fluid head H1 above ports 118 of inlet port row 1. Consequently, in this non-limiting embodiment, the ports of row 1 have a larger cross sectional area than the ports of row 11. Certainly, in other non-limiting embodiments, opposite arrangements, where the ports with the greater fluid have a smaller cross sectional area may be utilized.

Various methods of the present invention include the step of fluidizing particles by directing a fluidizing medium at the bed through ports, wherein at least two ports, preferably at least three ports, comprise different cross sectional areas. The ports may be arranged in a distribution grid and connected to a common medium source.

A non-limiting example of a method of fluidizing is as follows. It should be understood that velocities, percentages, diameters, flow rates, temperatures, reactant compositions, output gas, and any other operating parameter, may be varied according to the operation desired. The following operating conditions are merely specific to this non-limiting example, and are not meant to limit the claimed invention in any way, shape or form.

The ash particles are contacted within passage 22 by a high velocity air-steam stream having a velocity in t e range of 15,2 to 61 m/sec (about 50 to about 200 feet per second). This high velocity air-steam stream enters the chamber or passage 22 by passing from line 28 and through the narrow throat or orifice 24 of the passage or venturi tube 22. The ash particles may be admixed with a considerable amount of finely divided coal particles and form a semi-fixed bed in the passage 22. Depending upon the type of coal utilized, particle size, and other factors, this semi-fixed bed may have a density generally in the range of 641 to 969 g/l (about 40 to about 60 pounds per cubic foot).

The semi-fixed bed within the passage 22 protects the sides of the passage 22 from abrasive effects created by the high velocity stream through the throat or orifice 24 and additionally protects the walls of the vessel from localized high temperatures. Also, the air-steam stream entering the throat 24 via an inlet line 28 reacts with coal particles that enter the region of the passage 22 resulting in temperatures of 37,7 to 93,3 °C (about 100F to about 200F) higher than the temperature maintained in the fluid bed 12.

The air-steam stream represented by input through passage 22 may constitute in the range of approximately 20-40% of the total air and steam to the bed 12. The remainder enters by way of line 20 and grid 18. Typically, the fluid bed has a temperature of 982,2 to 1093,3 °C (1800F-2000F) and the temperature in the region of the passage is 1093,3 to 1204,4 °C (about 2000F-2200F).

The localized higher temperatures in the region of passage 22 cause the ash particles within the passage 22 to become sticky. As a consequence, the ash particles as they strike each other gradually agglomerate. When they reach a sufficient size and weight, the velocity of air-steam stream entering through the venturi orifice 24 is insufficient to keep the agglomerated particles in a fluid or suspended state. They pass downwardly through the orifice 24 into withdrawal line 30.

The velocity of the inlet gases through the venturi throat 24 may be high compared to the gas velocity at distribution grid 18. This high velocity stream, as mentioned previously, forms a jet or a spout giving rise to a violent and rapid circulation of solids in the zone of the passage 22. The gases passing through the orifice 24 may also contain a higher percentage of the oxident than those gases passing through the distribution grid 18. Thereby, as previously explained, a higher temperature is generated in the zone of the passage 22 and in the middle, but not entirely through the fluidized bed 12.

As another embodiment, the present invention also contemplates an annular solids removal arrangement, such as that shown in FIG. 5. Vessel 10 of FIG. 5 is as described above, except for the annular arrangement in the lower portion of vessel 10. Specifically, Air/steam or oxygen/steam enter through pipe 28, and ash is removed through annular passage 22A.

The present invention has been described mainly by reference to coal gasification. It should be appreciated, that the present invention is not limited to coal gasification, but rather finds utility in the gasification of any type of materials containing solid hydrocarbon material, not limiting examples of which include biomass. It should also be appreciated, that the present invention is not limited to coal gasification, but rather, finds utility in many applications in which fluidizing of particles is desired.

## Claims

1. A fluidized bed apparatus (100) comprising:
a vessel (10) having a top and bottom, and defining a fluidized bed region; and,
a sloping injection grid (18) comprising fluid inlet ports (118) positioned to provide a fluidizing medium to region, wherein at least two ports (118) have different diameters.

2. The apparatus of claim 1, wherein the vessel (10) has a center, and the port diameter of the inlet ports (118) increases with increasing distance from the center.

3. The apparatus of claim 1, wherein the vessel (10) has a center, and the port diameter of the inlet ports (118) decreases with increasing distance from the center.

4. The apparatus of claim 1, wherein the port diameter of the inlet ports (11 8) increases with increasing distance from the top.

5. The apparatus of claim 1, wherein the port diameter of the inlet ports (118) decreases with increasing distance from the top.

6. The apparatus of claim 1, wherein during operation with fluid head above the ports (118), the port diameter of the inlet ports (118) increases with increasing fluid head above the ports (118).

7. The apparatus of claim 1, wherein during operation with fluid head above the ports (118), the port diameter of the inlet ports (118) decreases with increasing fluid head above the ports (118).

8. The apparatus of claim 1, wherein the ports (118) are arranged in at least two sets of concentrically arranged ports, with the ports of the first set having a smaller diameter than the ports of the second set.

9. A method of fluidizing comprising:
introducing a fluid into a fluidized bed (12) of particles in a fluidized bed apparatus as claimed in any of claims 1 to 8, wherein the fluid is introduced into the bed (12) through the at least two ports (118) having different diameters.

10. A method of coal gassification comprising:
introducing coal particles into a fluidizing bed region of a fluidized bed apparatus as claimed in any of claims 1 to 8; and,
introducing a fluidizing medium comprising oxygen and steam through the injection grid (18) into the fluidized bed region.

## Patentansprüche

1. Wirbelschichtvorrichtung (100), die Folgendes umfasst:
ein Gefäß (10) mit einer Oberseite und einer Unterseite, das einen Wirbelschichtbereich definiert; und
ein geneigtes Eindüsgitter (18), umfassend Fluideinlassöffnungen (118), die dazu positioniert sind, ein Wirbelmedium an den Bereich bereitzustellen, wobei mindestens zwei Öffnungen (118) verschiedene Durchmesser aufweisen.

2. Vorrichtung nach Anspruch 1, wobei das Gefäß (10) eine Mitte aufweist und der Öffnungsdurchmesser der Einlassöffnungen (118) mit zunehmender Entfernung von der Mitte zunimmt.

3. Vorrichtung nach Anspruch 1, wobei das Gefäß (10) eine Mitte aufweist und der Öffnungsdurchmesser der Einlassöffnungen (118) mit zunehmender Entfernung von der Mitte abnimmt.

4. Vorrichtung nach Anspruch 1, wobei der Öffnungsdurchmesser der Einlassziffnungen (118) mit zunehmender Entfernung von der Oberseite zunimmt.

5. Vorrichtung nach Anspruch 1, Öffnungsdurchmesser der Öffnungsdurchmesser der Einlassöffnungen (118) mit zunehmender Entfernung von der Oberseite abnimmt.

6. Vorrichtung nach Anspruch 1, wobei während des Betriebs mit Fluiddruckhöhe über den Öffnungen (118), der Öffnungsdurchmesser der Einlassöffnungen (118) mit zunehmender Fluiddruckhöhe über den Öffnungen (118) zunimmt.

7. Vorrichtung nach Anspruch 1, wobei während des Betriebs mit Fluiddruckhöhe über den Öffnungen (118), der Öffnungsdurchmesser der Einlassöffnungen (118) mit zunehmender Fluiddruckhöhe über den Öffnungen (118) abnimmt.

8. Vorrichtung nach Anspruch 1, wobei die Öffnungen (118) in mindestens zwei Sätzen von konzentrisch angeordneten Öffnungen angeordnet sind, wobei die Öffnungen des ersten Satzes einen kleineren Durchmesser aufweisen als die Öffnungen des zweiten Satzes.

9. Verfahren zum Wirbeln, das Folgendes umfasst:
Einbringen eines Fluids in eine Wirbelschicht (12) aus Partikeln in einer Wirbelschichtvorrichtung nach einem der Ansprüche 1 bis 8, wobei das Fluid durch die mindestens zwei Öffnungen (118) mit verschiedenen Durchmessern in die Schicht (12) eingebracht wird.

10. Verfahren zur Kohlevergasung, das Folgendes umfasst:
Enbrinungen von Kohlepartikeln in einen Wirbelschichtbereich einer Wirbelschichtvorrichtung nach einem der Ansprüche 1 bis 8; und
Einbringen eines Sauerstoff und Dampf umfassenden Wirbelmediums durch das Eindüsgitter (18) in den Wirbelschichtbereich.

## Revendications

1. Appareil à lit fluidisé (100) comprenant:
une cuve (10) ayant un haut et une base et définissant une région de lit fluidisé ;
et
une grille d'injection inclinés (18) comprenant des orifices d'admission de fluide (118) positionnés pour fournir un milieu de fluidisation à la région, au moins deux orifices (118) ayant des diamètres différents.

2. Appareil selon la revendication 1, dans lequel la cuve (10) a un centre, et le diamètre d'orifice des orifices d'admission (118) augmente avec l'accroissement de la distance depuis le centre.

3. Appareil selon la revendication 1, dans lequel la cuve (10) a une centre, et le diamètre d'orifice des orifices d'admission (118) diminue avec l'accroissement de la distance depuis le centre.

4. Appareil selon la revendication 1, dans lequel le diamètre d'orifice des orifices d'admission (118) augmente avec l'accroissement de la distance depuis le haut.

5. Appareil selon la revendication 1, dans lequel le diamètre d'orifice des orifices d'admission (118) diminue avec l'accroissement de la distance depuis le haut.

6. Appareil selon la revendication 1, dans lequel durant le fonctionnement avec la tête de fluide au-dessus des orifices (118), le diamètre d'orifice des orifices d'admission (118) augmente avec une tête de fluide croissante au-dessus des orifices (118).

7. Appareil selon la revendication 1, dans lequel durant le fonctionnement avec la tête de fluide au-dessus des orifices (118), le diamètre d'orifice des orifices d'admission (118) diminue avec une tête de fluide croissante au-dessus des orifices (118).

8. Appareil selon la revendication 1, dans lequel les orifices (118) sont agencés dans au moins deux ensembles d'orifices agencés concentriquement, les orifices du premier ensemble ayant un diamètre inférieur aux orifices du second ensemble.

9. Procédé de fluidisation comprenant :
l'introduction d'un fluide dans un lit fluidisé (12) de particules dans un appareil à lit fluidisé selon l'une quelconque des revendication 1 à 8, dans lequel le fluide est introduit dans le lit (12) à travers les au moins deux orifices (118) de différents diamètres.

10. Procédé de gazéification du charbon comprenant:
l'introduction de particules de charbon dans une région de lit fluidisé d'un appareil à lit fluidisé selon l'une quelconque des revendications 1 à 8 ; et
l'introduction d'un milieu de fluidisation comprenant de l'oxygène et de la vapeur à travers la grille d'injection (18) dans la région à lit fluidisé.
